# EUROPEAN PATENT APPLICATION

(11) **EP 4 123 258 A1**
(43) Date of publication of application: **25.01.2023**
(21) Application number: 21187127.2
(22) Date of filing: 22.07.2021
(51) Int. Cl.: G01B 11/24, G06T 7/194

(54) **PLANAR OBJECT SEGMENTATION**

(71) Applicant: Siemens Corporation, Iselin, NJ 08830 (US)
(72) Inventor: MOURA CIRILO ROCHA, Eduardo, Albany, 94706 (US); TAMASKAR, Shashank, Davis, 95618 (US); XIA, Wei Xi, Daly City, 94015 (US); SOLOWJOW, Eugen, Berkeley, 94709 (US); TIAN, Nan, Foster City, 94404 (US); SATHYA NARAYANAN, Gokul Narayanan, Emeryville, 94608 (US)
(74) Representative: Horn Kleimann Waitzhofer Patentanwälte PartG mbB

(57) **Abstract**

Robots might interact with planar objects (e.g., garments) for process automation, quality control, to perform sewing operations, or the like. It is recognized herein that robots interacting with such planar objects can pose particular problems, for instance problems related to detecting the planar object and estimating the pose of the detected planar object. A system can be configured to detect or segment planar objects, such as garments. The system can include a three-dimensional (3D) sensor positioned to detect a planar object along a transverse direction. The system can further include a first surface that supports the planar object. The first surface can be positioned such that the planar object is disposed between the first surface and the 3D sensor along the transverse direction. In various examples, the 3D sensor is configured to detect the planar object without detecting the first surface.

## Description

### BACKGROUND

Robotics is a powerful tool for automating tasks inside and outside of the factory setting. Autonomous operations in dynamic environments may be applied to mass customization (e.g., high-mix, low-volume manufacturing), on-demand flexible manufacturing processes in smart factories, warehouse automation in smart stores, automated deliveries from distribution centers in smart logistics, and the like. In order to perform autonomous operations, such as grasping and manipulation, robots may learn skills through exploring the environment. In particular, for example, robots might interact with different planar objects under different situations. By way of example, robots might interact with planar objects (e.g., garments) for process automation and quality control. It is recognized herein that robots interacting with such planar objects can pose particular problems, for instance problems related to detecting the planar object and estimating the pose of the detected planar object.

### BRIEF SUMMARY

Embodiments of the invention address and overcome one or more of the described-herein shortcomings or technical problems by providing methods, systems, and apparatuses for detecting or segmenting planar objects. In particular, based on detecting and segmenting a given planar object, pose estimation can be performed on the object so that a robot can interact with the object.

In an example aspect, a system is configured to detect or segment planar objects, such as garments. The system can include a three-dimensional (3D) sensor positioned to detect a planar object along a transverse direction. The system can further include a first surface that supports the planar object. The first surface can be positioned such that the planar object is disposed between the first surface and the 3D sensor along the transverse direction. In various examples, the 3D sensor is configured to detect the planar object without detecting the first surface. In some examples, the first surface is configured to reflect light such that the first surface defines a reflective surface. In other cases, the first surface is configured to allow light to pass through the first surface such that the first surface defines a transparent surface. In yet another example, the first surface can be configured to absorb light such that the first surface defines an absorbent surface. The system can further include a second surface that supports the first surface. The second surface can define a material composition that is different than a material composition defined by the first surface. In some cases in which the first surface defines a reflective surface or an absorbent surface, the material composition of the reflective surface or the absorbent surface is based on the 3D sensor. The second surface can be positioned such that the first surface is between the 3D sensor and the second surface along the transverse direction.

In some examples in which the first surface defines a transparent surface, the transparent surface can be positioned such that space is defined between the second surface and the transparent surface along the transverse direction. The space can define a distance between the transparent surface and the second surface that is greater than a threshold. Further, the 3D sensor can define a resolution and the threshold can be based on the resolution of the 3D sensor.

In another example aspect, a system is configured to detect planar objects, and the system includes a three-dimensional (3D) sensor positioned to detect a planar object along a transverse direction. The system further includes a first surface that supports the planar object. The first surface can be positioned such that the first surface is disposed between the planar object and the 3D sensor along the transverse direction. The 3D sensor can be configured to detect the planar object without detecting the first surface. The first surface can be configured to allow light to pass through the first surface such that the first surface defines a transparent surface. In particular, for example, the first surface can define a transparent acrylic sheet. The system can further include a robotic arm attached to an end effector configured to secure the planar object such that the first surface is disposed between the planar object and the 3D sensor along the transverse direction. The end effector can be further configured to secure the first surface such that the first surface is spaced from the 3D sensor along the transverse direction.

In yet another aspect, an autonomous system, such as an autonomous sewing machine for example, can press a garment against at transparent surface. The system can capture a 3D image of the garment through the transparent surface. The system can further perform object segmentation on the image so as to determine an appearance of the garment.

### BRIEF DESCRIPTION OF THE SEVERAL VIEWS OF THE DRAWINGS

The foregoing and other aspects of the present invention are best understood from the following detailed description when read in connection with the accompanying drawings. For the purpose of illustrating the invention, there is shown in the drawings embodiments that are presently preferred, it being understood, however, that the invention is not limited to the specific instrumentalities disclosed. Included in the drawings are the following Figures:
FIG. 1 shows an example system that includes an autonomous machine in an example physical environment that includes various planar objects in accordance with an example embodiment.
FIG. 2 is a block diagram that illustrates an example system including a 3D sensor and a reflective surface, wherein the system is configured to detect planar objects in accordance with an example embodiment.
FIG. 3 is a block diagram that illustrates an example system including a 3D sensor and a transparent surface, wherein the system is configured to detect planar objects in accordance with an example embodiment.
FIG. 4 is a block diagram that illustrates another example system including a 3D sensor and a transparent surface, wherein the system is configured to detect planar objects in accordance with another example embodiment.
FIG. 5 is an example depth map that can be generated by systems described herein, for instance the system illustrated in FIG. 4, in accordance with various embodiments.
FIG. 6 illustrates a computing environment within which embodiments of the disclosure may be implemented.

### DETAILED DESCRIPTION

As an initial matter, it is recognized herein that there are various technical issues related to a robot detecting a planar object, particularly a planar object having an unknown appearance. If the appearance of a given planar object is known, the object can be placed on a surface that has an appearance that is significantly different than the object itself, such that a sensor can distinguish the object from the surface. In some cases, however, the planar objects that need to be detected have a novel or unknown texture or appearance, such that the surface cannot be engineered to always be different than the objects it supports. Furthermore, it is recognized herein that ambient lighting conditions and shades can further complicate the detection or segmentation of a given planar object. Segmentation generally refers to the process of labeling each pixel of an image that includes a given object, so as to separate the object from the rest of the environment, thereby detecting the object. Thus, segmentation and detection can used interchangeably herein without limitation, unless otherwise specified.

By way of further background, in current approaches, surfaces are often engineered with the intent of decreasing the probability that the surface appears similarly to a novel object that is placed on the surface. In some cases, uniform green surfaces are used. Besides the color, other information can be added to a surface, such as multi-color patterns, so as to distinguish the surface from potential objects that might rest upon the surface. While such colors or patterns may decrease the probability that the background (surface) of the object is similar to the object itself, it is recognized herein that such surfaces often increase the complexity of the image processing involved in detecting the object.

Thus, as described above, it is recognized herein that current object segmentation systems or methodologies typically rely on information associated with the background. For example, based on the information concerning the appearance of the background, segmentation of an object in an image can be performed by computing a difference between the expected background surface and the acquired image. That difference can be computed in various ways using standard computer vision. For instance, pixel-wise differences can be computed based on color; bag-of-features differences can be computed using texture, color, entropy, or the like; differences can be computed based on pattern recognition using frequency domain data; etc. In some current approaches to planar object detection, an engineer might not specific the surface, but instead the system performs complex detection methods in which characteristics of a surface can be learned given a dataset of the related environment. It is recognized herein that, in some cases, such complex detection methods can perform robust image processing, they generally cannot solve the technical issues described herein related to detecting planar objects that are similar to the surface upon which the objects rest. In yet another example of current approaches to object detection, it is recognized herein that edge detection techniques can be used in situations in which the object defines features that are significantly different than the background. It is further recognized herein that the current approaches described above typically use 2D data (e.g., RGB images) and image dimensions, which can result in additional processing during pose estimation, in particular calibration, because the data is translated to physical dimensions.

By way of example, an autonomous sewing machine may detect a garment (planar object) and estimate the pose of the garment to perform operations related to sewing. Continuing with the example, there might be no available knowledge concerning the garment's appearance during the engineering phase of the autonomous sewing machine. In particular, for example, the garment might include any color, texture, drawn or painted patterns, or the like. Thus, engineering a surface that has an appearance that is different than every potential garment can be unviable.

In accordance with various embodiments described herein, to address the issues described above, among others, an autonomous system can include a three-dimensional (3D) sensor and a reflective or transparent surface that supports planar objects, so as to robustly estimate the pose of planar objects, for instance planar objects having an unknown or novel appearance.

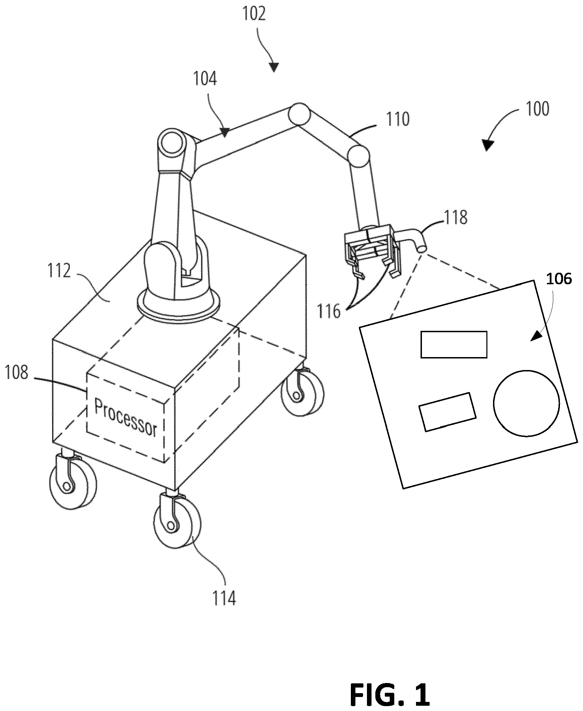

Referring now to FIG. 1, an example industrial or physical environment 100 is shown. As used herein, a physical environment can refer to any unknown or dynamic industrial environment. A reconstruction or model may define a virtual representation of the physical environment 100 or one or more planar objects 106 within the physical environment 100. For purposes of example, the planar objects 106 can also be referred to as garments 106 without limitation, though it will be understood that the planar objects 106 can include any flat object as desired, such as paper, cardboard, plastic sheets, metallic sheets, a combination thereof, or the like, and all such planar objects are contemplated as being within the scope of this disclosure. The physical environment 100 can include a computerized autonomous system 102 configured to perform one or more manufacturing operations, such as assembly, transport, or the like. The autonomous system 102 can include one or more robot devices or autonomous machines, for instance an autonomous sewing machine or robot device 104, configured to perform one or more industrial tasks, such as bin picking, grasping, sewing, or the like. The system 102 can include one or more computing processors configured to process information and control operations of the system 102, in particular the autonomous machine 104. The autonomous machine 104 can include one or more processors, for instance a processor 108, configured to process information and/or control various operations associated with the autonomous machine 104. An autonomous system for operating an autonomous machine within a physical environment can further include a memory for storing modules. The processors can further be configured to execute the modules so as to process information and generate models based on the information. It will be understood that the illustrated environment 100 and the system 102 are simplified for purposes of example. The environment 100 and the system 102 may vary as desired, and all such systems and environments are contemplated as being within the scope of this disclosure.

Still referring to FIG. 1, the autonomous machine 104 can further include a robotic arm or manipulator 110 and a base 112 configured to support the robotic manipulator 110. The base 112 can include wheels 114 or can otherwise be configured to move within the physical environment 100. The autonomous machine 104 can further include an end effector 116 attached to the robotic manipulator 110. The end effector 116 can include one or more tools configured to grasp and/or move objects 106. Example end effectors 116 include finger grippers or vacuum-based suction cups. The robotic manipulator 110 can be configured to move so as to change the position of the end effector 116, for example, so as to place or move objects 106 within the physical environment 100. The system 102 can further include one or more cameras or sensors, for instance a three-dimensional (3D) point cloud camera 118, configured to detect or record objects 106 within the physical environment 100. The camera 118 can be mounted to the robotic manipulator 110 or otherwise configured to generate a 3D point cloud of a given scene, for instance the physical environment 100.

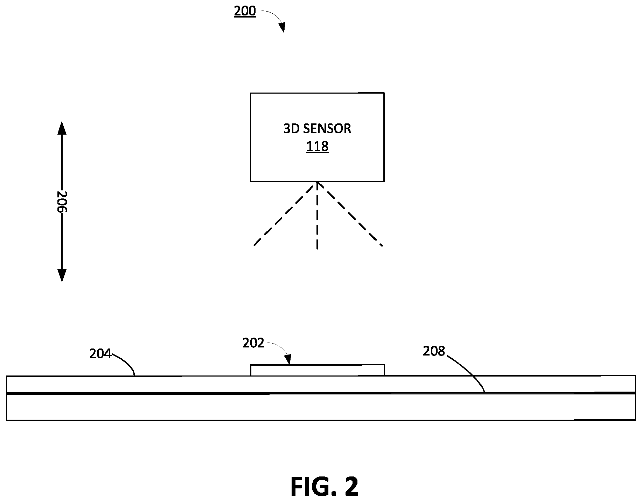

Referring now to FIG. 2, an example system 200 can include the 3D sensor 118 configured to detect a given planar object 202, for instance a garment, supported by a first surface 204. The example system 200 can further include a second surface 208 that supports the first surface 204, such that the first surface 204 is between the object 202 and the second surface 208 along a transverse direction 206. The second surface 208 can define a material composition that is different than a material composition defined by the first surface 204. The 3D sensor 118 can be positioned to detect the planar object 202 along a transverse direction 206. In particular, for example, the 3D sensor 118 can be spaced from the planar object 202 along the transverse direction 206, such that no obstructions are between the 3D sensor 118 and the object 202 along the transverse direction 206. The 3D sensor 118 can define a stereo camera, a light detection and ranging (LiDAR) 3D camera, or the like. In an example, the first surface 204 can be configured to reflect light such that the first surface defines a reflective surface 204. In some cases, the particular reflective surface 204 can be based on the 3D sensor 118. In some cases in which the 3D sensor 118 is a stereo camera, for example, the reflective surface 204 can define a mirror. In some cases in which the 3D sensor 118 is an infra-red sensor, the reflective surface 204 can define a sheet of aluminum. It will be understood that the reflective surface 204 can define alternative reflective compositions, for instance reflective metallic materials, as desired. The second surface 208 can define a solid surface composed of any material configured to support the first surface 204 as desired, for instance wood or plastic. The planar object 202 can define a garment or other planar object having an appearance as desired. In particular, the appearance of the planar object 202 can be unknown by the system 200 until it is detected by the 3D sensor 118.

In another example, the first surface 204 can be configured to absorb light, or reflect little light, such that the first surface 204 defines an absorbent surface 204. In some cases, the particular absorbent surface 204 can be based on the 3D sensor 118. It will be understood that the absorbent surface 204 can define alternative absorbent compositions, for instance black-colored or homogenous light-absorbent materials, as desired.

Still referring to FIG. 2, in an example operation, the 3D sensor 118 can detect reflections from the reflective surface 204, such that the surface that supports the object 202 is not detected. Rather, only the object 202 is detected by the 3D sensor 118. For example, in some cases, the 3D sensor 118 can generate a depth image defining a plurality of elements or pixels, wherein each element indicates a measured distance from the 3D sensor 118 to the respective pixel. As an example, if there is a ceiling above the 3D sensor 118 along the transverse direction 206, the depth map generated by the 3D sensor 118 can indicate the distance at the reflective surface 204 surrounding the object 202 as equal to the sum of the distance from the 3D sensor 118 to the reflective surface 204 along the transverse direction 206 and the distance from the reflective surface 204 to the ceiling along the transverse direction 206. This sum can be compared to a predetermined threshold associated with the distance from the surface 202 to the 3D sensors. If a given distance is less than the predetermined threshold, the system can determine that the pixel associated with the given distance is part of the object 202 that is segmented. If a given distance is greater than the predetermined threshold, the system can determine that the pixel associated with the given distance is not part of the object that is segmented.

Similarly, in another example operation, the 3D sensor 118 can detect the object 202 such that the absorbent surface 204 that can support the object 202 is not detected. For example, in some cases, the 3D sensor 118 can generate a depth image defining a plurality of elements or pixels, wherein each element indicates a measured distance from the 3D sensor 118 to the respective pixel. As an example, if the first surface 204 defines an absorbent surface, in some cases, the 3D sensor 118 does not detect the absorbent surface because light is absorbed by the first surface 204 configured as an absorbent surface. Thus, continuing with the example, the depth map generated by the 3D sensor 118 can represent the absorbent surface as missing data. The missing data can compared to a predetermined threshold associated with the distance from the surface 202 to the 3D sensors. If a given distance is less than the predetermined threshold, the system can determine that the pixel associated with the given distance is part of the object 202 that is segmented. If a given distance is greater than the predetermined threshold, or if data is missing such that no data is compared to the predetermined threshold, the system can determine that the pixel associated with the given distance is not part of the object that is segmented.

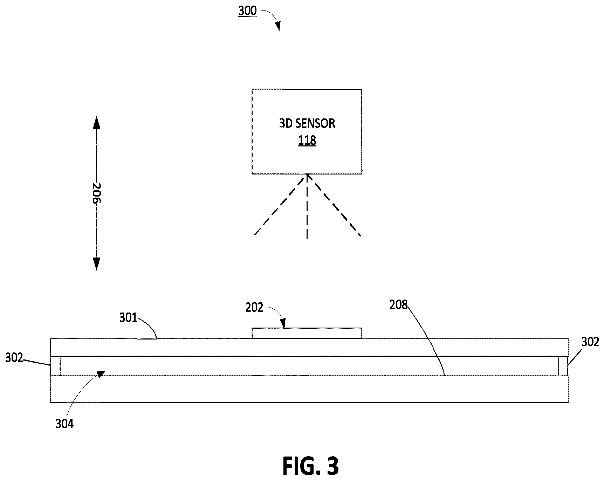

Referring now to FIG. 3, another example system 300 that includes the 3D sensor 118 configured to detect the planar object 202, for instance a garment, is shown. The system 300 includes spacers 302, for instance legs, configured to raise a first or transparent surface 301 above the second surface 208, so as to define air or space 304 between the transparent surface 301 and the second surface 208 along the transverse direction 206. The planar object 202 can be supported by the transparent surface 301, such that the planar object 202 is between the 3D sensor 118 and the transparent surface 301 along the transverse direction 206. Thus, the system 300 can include the transparent surface 301 elevated above the solid surface 208. The distance of the space 304 measured along the transverse direction 206, or the height of the elevation of the transparent surface 301, in some cases, can vary based on the resolution of the 3D sensor 118. By way of example, the resolution of the sensor 118 can define a threshold for the distance of the space 304 measured along the transverse direction 206. In particular, for example, if the sensor 118 has a resolution of 2mm the threshold for the distance of the spaced 304 measured along the transverse direction 206 might be 2mm. In some cases, increasing the elevation height of the transparent surface 301, or the distance of the space 304 measured along the transverse direction 206, may increase the precision of the system 300, in particular the precision of the segmentation of the object 202. The spacers 302 are presented to illustrate an example; it will be understood that the transparent surface 301 can be suspended above the second surface 208 or otherwise spaced from the second surface 208, and all such configurations are contemplated as being within the scope of this disclosure.

By way of example, in some cases, the precision and accuracy of the sensor 118, for instance structured light sensors defining a precision and accuracy in the order of micrometers, might allow for the transparent surface 301 to be placed on the second surface 208. That is, the thickness of the transparent surface 301 along the transverse direction might be enough for the sensor 318 to differentiate the object 302 from the second surface 208. In such cases, the first surface 204 shown in FIG. 2 can define the transparent surface 301. If the 3D sensor 118 defines a low-cost sensor that is noisy regardless of precision, the space 304 might define a few centimeters if the precision of the sensor 118 is a few millimeters. Without being bound by theory, but by way of example, if the space 304 defines a distance along the transverse direction 206 that is about or greater than a multiple of ten of the precision of the sensor 118, the system 300 can distinguish the object 202 from the second surface 208.

Still referring to FIG. 3, in the system 300, the 3D sensor 118 can be spaced from the planar object 202 along the transverse direction 206, such that no obstructions are between the 3D sensor 118 and the object 202 along the transverse direction 206. In some cases, the first surface 301 can define any transparent surface that allows light to pass through it, such as, for example, clear glass and plastic. The transparent surface can depend on the 3D sensor 118. It is recognized herein that the vast majority of sensors will not detect glass or transparent plastic, such that, in most cases, any transparent surface can be used. It is also recognized herein that different sensors operate in different spectral bands (e.g., visible light, near UV, IR), and specific bands might require specific types of glasses. By of example, and without limitation, quartz glass might be used with UV or near-UV light. The second surface 208 can be composed of any material configured to support spacers 302 and the first surface 301 as desired, for instance wood or plastic. The planar object 202 can define a garment or other planar object having an appearance as desired. In particular, the appearance of the planar object 202 can be unknown by the system 300 until it is detected by the 3D sensor 118.

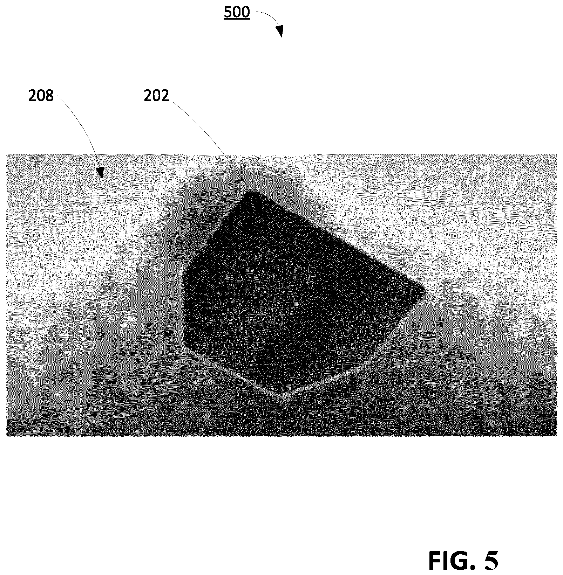

With continuing reference to FIG. 3, in operation, the 3D sensor 118 can detect the planar object 202, such that the surface that supports the object 202 is not detected. Instead of detecting the surface that supports the object 202, in particular the first or transparent surface 301, the system 300 can detect the object 202 and the solid surface 208 spaced below the object 202. Referring also to FIG. 5, the 3D sensor 118 configured in the systems 200 and 300 can produce various depth maps, for instance an example depth map 500. As shown, the depth map 500 can define a view along the transverse direction 206 of the planar object 202 and the solid surface 208 surrounding the planar object 202. The system 300 can then perform edge detection algorithms and/or distance thresholding computations so as to determine a precise rendering of the appearance of the object 202.

In particular, with respect to edge detection, the system can perform noise filtering (e.g., temporal filtering over multiple frames, low-pass filter, NLM denoising), canny edge detection, or the like so as to identify the contours of the object 202 via the detected edges. It is recognized herein that, in some cases, edge detection permits the surface to not be parallel to the sensor plane. That is, the sensor 118 can be in a diagonal plane with respect to the object 202. With respect to thresholding computations, noise filtering can be performed so as to identify sensor noise. In an example in which the sensor plane is parallel to the surface defined by the planar object 202, the pixels that are below (closer to) the threshold can be considered part of the object 202. When there is some knowledge of the shape of the planar object 202, post-processing can be performed to further clean or refine the detection.

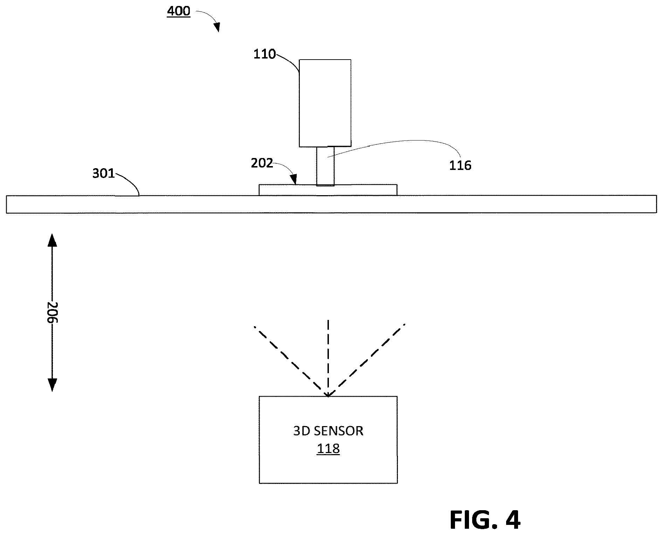

Referring now to FIG. 4, another example system 400 that includes the 3D sensor 118 configured to detect the planar object 202, for instance a garment, is shown. The system 400 includes the robotic arm 110 and the end effector 116, for instance a vacuum-based gripper or suction cup, securing the planar object 202, such that the planar object 202 is spaced from the 3D sensor 118 along the transverse direction 206. The planar object 202 can be supported by the first or transparent surface 301, such that the transparent surface 301 is disposed between the planar object 202 and the 3D sensor 118. The first surface 301 can be positioned such that the first surface 301 is disposed between the planar object 202 and the 3D sensor 118 along the transverse direction 206. Thus, in some cases, the end effector 116 can also secure the transparent surface 301 in a position in which the transparent surface 301 is spaced from the 3D sensor 118 along the transverse direction 206. In particular, in some cases, the robotic arm 110 can press the planar object 202 against the transparent surface 301 so that the planar object 202 can be detected by the 3D sensor 118, through the transparent surface 301. In such configurations, among others, the transparent surface 301 may define a transparent acrylic sheet. As stated above with respect to the systems 200 and 300, the planar object 202 can define a garment or other planar object having an appearance as desired, and the appearance of the planar object 202 can be unknown by the system 400 until it is detected by the 3D sensor 118.

With continuing reference to FIG. 4, in operation, the 3D sensor 118 can detect the planar object 202, such that the surface that supports the object 202, in particular the transparent surface 301, is not detected. In some examples, the system 300 detects the planar object 202 and the background spaced behind, for instance above, the object 202. Thus, the 3D sensor 118 configured in the system 400 can produce various depth maps, for instance a depth map like the example depth map 500. In particular, a depth map generated by the system 400 can define a view along the transverse direction 206 of the planar object 202 and the background that surrounds the planar object 202. As described herein, the system 400 can then perform edge detection algorithms and/or distance thresholding computations so as to determine a precise rendering of the appearance of the object 202.

Still referring to FIG. 4, it is recognized herein that in some cases, picking and placing planar objects on a surface can be a source of error that is independent of the sensors used by a given system or object segmentation algorithms performed by a given system. In particular, it is recognized herein that a robot releasing the object can introduce errors. The system 400 can mitigate or eliminate this source of error, as the end effector 116 can press the object 202 across the transparent surface 301, such that the end effector does not release the object 202.

It will be understood that although the transverse direction 206 is illustrated as downward and upward for purposes of example, the transverse direction can define alternative directions as desired, such as side to side or angled with respect to an upward/downward direction, and all such directions are contemplated as being within the scope of this disclosure.

Thus, as described herein, in accordance with various embodiments, systems can identify and detect planar objects having a novel appearance. Without being bound by theory, the system configurations described herein can capture images of planar objects, and the system can perform an object segmentation on such images that is simplified as compared to prior approaches. In some cases, due to the configurations of the systems described herein, basic computer vision techniques can be employed on the images captured by the systems, so as to robustly segment the objects of interest. In particular, for example, planar objects can be segmented by the systems described herein so as to dispose of the captured 3D data and covert the 3D data to physical measurements independent of the camera position (e.g., 3D sensor 118), which can simplify pose estimation and eliminate additional calibration steps (e.g., converting pixel coordinates to physical coordinates) performed in prior approaches. Thus, systems described herein can reduce engineering costs associated with preparing systems for objects having new or unknown appearances, and the systems described herein can reduce computing overhead required for image processing.

Furthermore, it is recognized herein that prior approaches typically use two-dimensional (2D) data, which assumes that the planar object, for instance a garment, lays flat on the surface. It is recognized herein, however, that in some cases or applications, the position of the garment is not perfectly planar, for instance due to wrinkles and/or deformations. The 3D images that are captured and segmented by the images described herein can identify such non-conformities and thus can compute a more realistic detected 3D mesh as compared to prior systems, for instance systems that use 2D cameras.

Thus, the systems described herein, in particular autonomous systems, can perform various operations associated with performing object segmentation of a planar object. As an example, the system 400 can press a garment against a transparent surface and capture a 3D image of the garment through the transparent surface. The system can further perform object segmentation on the image so as to determine an appearance of the garment.

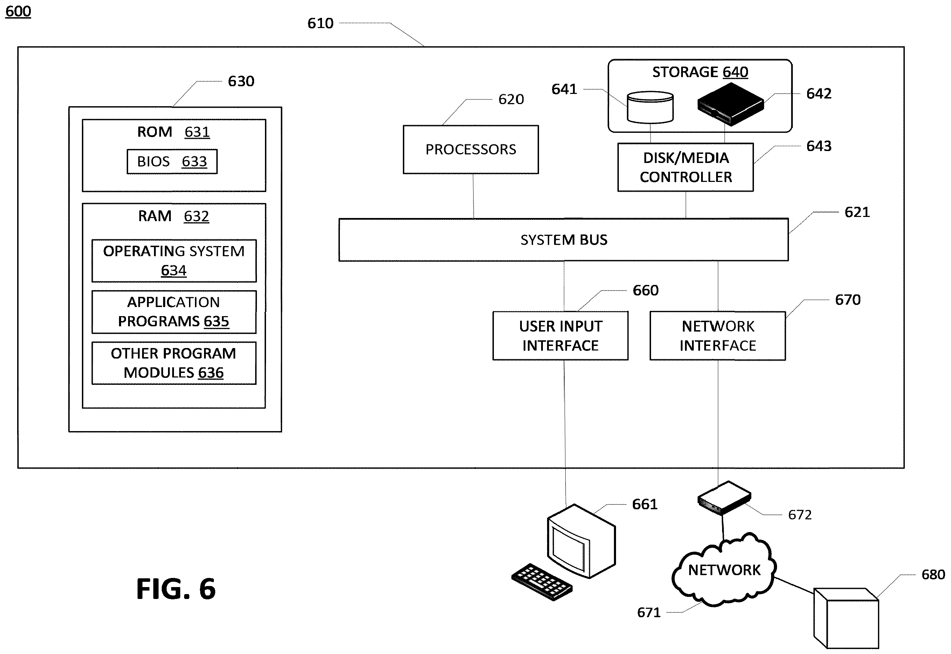

FIG. 6 illustrates an example of a computing environment within which embodiments of the present disclosure may be implemented. A computing environment 600 includes a computer system 610 that may include a communication mechanism such as a system bus 621 or other communication mechanism for communicating information within the computer system 610. The computer system 610 further includes one or more processors 620 coupled with the system bus 621 for processing the information. The autonomous system 102 may include, or be coupled to, the one or more processors 620.

The processors 620 may include one or more central processing units (CPUs), graphical processing units (GPUs), or any other processor known in the art. More generally, a processor as described herein is a device for executing machine-readable instructions stored on a computer readable medium, for performing tasks and may comprise any one or combination of, hardware and firmware. A processor may also comprise memory storing machine-readable instructions executable for performing tasks. A processor acts upon information by manipulating, analyzing, modifying, converting or transmitting information for use by an executable procedure or an information device, and/or by routing the information to an output device. A processor may use or comprise the capabilities of a computer, controller or microprocessor, for example, and be conditioned using executable instructions to perform special purpose functions not performed by a general purpose computer. A processor may include any type of suitable processing unit including, but not limited to, a central processing unit, a microprocessor, a Reduced Instruction Set Computer (RISC) microprocessor, a Complex Instruction Set Computer (CISC) microprocessor, a microcontroller, an Application Specific Integrated Circuit (ASIC), a Field-Programmable Gate Array (FPGA), a System-on-a-Chip (SoC), a digital signal processor (DSP), and so forth. Further, the processor(s) 620 may have any suitable microarchitecture design that includes any number of constituent components such as, for example, registers, multiplexers, arithmetic logic units, cache controllers for controlling read/write operations to cache memory, branch predictors, or the like. The microarchitecture design of the processor may be capable of supporting any of a variety of instruction sets. A processor may be coupled (electrically and/or as comprising executable components) with any other processor enabling interaction and/or communication there-between. A user interface processor or generator is a known element comprising electronic circuitry or software or a combination of both for generating display images or portions thereof. A user interface comprises one or more display images enabling user interaction with a processor or other device.

The system bus 621 may include at least one of a system bus, a memory bus, an address bus, or a message bus, and may permit exchange of information (e.g., data (including computer-executable code), signaling, etc.) between various components of the computer system 610. The system bus 621 may include, without limitation, a memory bus or a memory controller, a peripheral bus, an accelerated graphics port, and so forth. The system bus 621 may be associated with any suitable bus architecture including, without limitation, an Industry Standard Architecture (ISA), a Micro Channel Architecture (MCA), an Enhanced ISA (EISA), a Video Electronics Standards Association (VESA) architecture, an Accelerated Graphics Port (AGP) architecture, a Peripheral Component Interconnects (PCI) architecture, a PCI-Express architecture, a Personal Computer Memory Card International Association (PCMCIA) architecture, a Universal Serial Bus (USB) architecture, and so forth.

Continuing with reference to FIG. 6, the computer system 610 may also include a system memory 630 coupled to the system bus 621 for storing information and instructions to be executed by processors 620. The system memory 630 may include computer readable storage media in the form of volatile and/or nonvolatile memory, such as read only memory (ROM) 631 and/or random access memory (RAM) 632. The RAM 632 may include other dynamic storage device(s) (e.g., dynamic RAM, static RAM, and synchronous DRAM). The ROM 631 may include other static storage device(s) (e.g., programmable ROM, erasable PROM, and electrically erasable PROM). In addition, the system memory 630 may be used for storing temporary variables or other intermediate information during the execution of instructions by the processors 620. A basic input/output system 633 (BIOS) containing the basic routines that help to transfer information between elements within computer system 610, such as during start-up, may be stored in the ROM 631. RAM 632 may contain data and/or program modules that are immediately accessible to and/or presently being operated on by the processors 620. System memory 630 may additionally include, for example, operating system 634, application programs 635, and other program modules 636. Application programs 635 may also include a user portal for development of the application program, allowing input parameters to be entered and modified as necessary.

The operating system 634 may be loaded into the memory 630 and may provide an interface between other application software executing on the computer system 610 and hardware resources of the computer system 610. More specifically, the operating system 634 may include a set of computer-executable instructions for managing hardware resources of the computer system 610 and for providing common services to other application programs (e.g., managing memory allocation among various application programs). In certain example embodiments, the operating system 634 may control execution of one or more of the program modules depicted as being stored in the data storage 640. The operating system 634 may include any operating system now known or which may be developed in the future including, but not limited to, any server operating system, any mainframe operating system, or any other proprietary or non-proprietary operating system.

The computer system 610 may also include a disk/media controller 643 coupled to the system bus 621 to control one or more storage devices for storing information and instructions, such as a magnetic hard disk 641 and/or a removable media drive 642 (e.g., floppy disk drive, compact disc drive, tape drive, flash drive, and/or solid state drive). Storage devices 640 may be added to the computer system 610 using an appropriate device interface (e.g., a small computer system interface (SCSI), integrated device electronics (IDE), Universal Serial Bus (USB), or FireWire). Storage devices 641, 642 may be external to the computer system 610.

The computer system 610 may also include a field device interface 665 coupled to the system bus 621 to control a field device 666, such as a device used in a production line. The computer system 610 may include a user input interface or GUI 661, which may comprise one or more input devices, such as a keyboard, touchscreen, tablet and/or a pointing device, for interacting with a computer user and providing information to the processors 620.

The computer system 610 may perform a portion or all of the processing steps of embodiments of the invention in response to the processors 620 executing one or more sequences of one or more instructions contained in a memory, such as the system memory 630. Such instructions may be read into the system memory 630 from another computer readable medium of storage 640, such as the magnetic hard disk 641 or the removable media drive 642. The magnetic hard disk 641 (or solid state drive) and/or removable media drive 642 may contain one or more data stores and data files used by embodiments of the present disclosure. The data store 640 may include, but are not limited to, databases (e.g., relational, object-oriented, etc.), file systems, flat files, distributed data stores in which data is stored on more than one node of a computer network, peer-to-peer network data stores, or the like. The data stores may store various types of data such as, for example, skill data, sensor data, or any other data generated in accordance with the embodiments of the disclosure. Data store contents and data files may be encrypted to improve security. The processors 620 may also be employed in a multi-processing arrangement to execute the one or more sequences of instructions contained in system memory 630. In alternative embodiments, hard-wired circuitry may be used in place of or in combination with software instructions. Thus, embodiments are not limited to any specific combination of hardware circuitry and software.

As stated above, the computer system 610 may include at least one computer readable medium or memory for holding instructions programmed according to embodiments of the invention and for containing data structures, tables, records, or other data described herein. The term "computer readable medium" as used herein refers to any medium that participates in providing instructions to the processors 620 for execution. A computer readable medium may take many forms including, but not limited to, non-transitory, non-volatile media, volatile media, and transmission media. Non-limiting examples of non-volatile media include optical disks, solid state drives, magnetic disks, and magneto-optical disks, such as magnetic hard disk 641 or removable media drive 642. Non-limiting examples of volatile media include dynamic memory, such as system memory 630. Non-limiting examples of transmission media include coaxial cables, copper wire, and fiber optics, including the wires that make up the system bus 621. Transmission media may also take the form of acoustic or light waves, such as those generated during radio wave and infrared data communications.

Computer readable medium instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, may be implemented by computer readable medium instructions.

The computing environment 600 may further include the computer system 610 operating in a networked environment using logical connections to one or more remote computers, such as remote computing device 680. The network interface 670 may enable communication, for example, with other remote devices 680 or systems and/or the storage devices 641, 642 via the network 671. Remote computing device 680 may be a personal computer (laptop or desktop), a mobile device, a server, a router, a network PC, a peer device or other common network node, and typically includes many or all of the elements described above relative to computer system 610. When used in a networking environment, computer system 610 may include modem 672 for establishing communications over a network 671, such as the Internet. Modem 672 may be connected to system bus 621 via user network interface 670, or via another appropriate mechanism.

Network 671 may be any network or system generally known in the art, including the Internet, an intranet, a local area network (LAN), a wide area network (WAN), a metropolitan area network (MAN), a direct connection or series of connections, a cellular telephone network, or any other network or medium capable of facilitating communication between computer system 610 and other computers (e.g., remote computing device 680). The network 671 may be wired, wireless or a combination thereof. Wired connections may be implemented using Ethernet, Universal Serial Bus (USB), RJ-6, or any other wired connection generally known in the art. Wireless connections may be implemented using Wi-Fi, WiMAX, and Bluetooth, infrared, cellular networks, satellite or any other wireless connection methodology generally known in the art. Additionally, several networks may work alone or in communication with each other to facilitate communication in the network 671.

It should be appreciated that the program modules, applications, computer-executable instructions, code, or the like depicted in FIG. 6 as being stored in the system memory 630 are merely illustrative and not exhaustive and that processing described as being supported by any particular module may alternatively be distributed across multiple modules or performed by a different module. In addition, various program module(s), script(s), plug-in(s), Application Programming Interface(s) (API(s)), or any other suitable computer-executable code hosted locally on the computer system 610, the remote device 680, and/or hosted on other computing device(s) accessible via one or more of the network(s) 671, may be provided to support functionality provided by the program modules, applications, or computer-executable code depicted in FIG. 6 and/or additional or alternate functionality. Further, functionality may be modularized differently such that processing described as being supported collectively by the collection of program modules depicted in FIG. 6 may be performed by a fewer or greater number of modules, or functionality described as being supported by any particular module may be supported, at least in part, by another module. In addition, program modules that support the functionality described herein may form part of one or more applications executable across any number of systems or devices in accordance with any suitable computing model such as, for example, a client-server model, a peer-to-peer model, and so forth. In addition, any of the functionality described as being supported by any of the program modules depicted in FIG. 6 may be implemented, at least partially, in hardware and/or firmware across any number of devices.

It should further be appreciated that the computer system 610 may include alternate and/or additional hardware, software, or firmware components beyond those described or depicted without departing from the scope of the disclosure. More particularly, it should be appreciated that software, firmware, or hardware components depicted as forming part of the computer system 610 are merely illustrative and that some components may not be present or additional components may be provided in various embodiments. While various illustrative program modules have been depicted and described as software modules stored in system memory 630, it should be appreciated that functionality described as being supported by the program modules may be enabled by any combination of hardware, software, and/or firmware. It should further be appreciated that each of the above-mentioned modules may, in various embodiments, represent a logical partitioning of supported functionality. This logical partitioning is depicted for ease of explanation of the functionality and may not be representative of the structure of software, hardware, and/or firmware for implementing the functionality. Accordingly, it should be appreciated that functionality described as being provided by a particular module may, in various embodiments, be provided at least in part by one or more other modules. Further, one or more depicted modules may not be present in certain embodiments, while in other embodiments, additional modules not depicted may be present and may support at least a portion of the described functionality and/or additional functionality. Moreover, while certain modules may be depicted and described as sub-modules of another module, in certain embodiments, such modules may be provided as independent modules or as sub-modules of other modules.

Although specific embodiments of the disclosure have been described, one of ordinary skill in the art will recognize that numerous other modifications and alternative embodiments are within the scope of the disclosure. For example, any of the functionality and/or processing capabilities described with respect to a particular device or component may be performed by any other device or component. Further, while various illustrative implementations and architectures have been described in accordance with embodiments of the disclosure, one of ordinary skill in the art will appreciate that numerous other modifications to the illustrative implementations and architectures described herein are also within the scope of this disclosure. In addition, it should be appreciated that any operation, element, component, data, or the like described herein as being based on another operation, element, component, data, or the like can be additionally based on one or more other operations, elements, components, data, or the like. Accordingly, the phrase "based on," or variants thereof, should be interpreted as "based at least in part on."

Although embodiments have been described in language specific to structural features and/or methodological acts, it is to be understood that the disclosure is not necessarily limited to the specific features or acts described. Rather, the specific features and acts are disclosed as illustrative forms of implementing the embodiments. Conditional language, such as, among others, "can," "could," "might," or "may," unless specifically stated otherwise, or otherwise understood within the context as used, is generally intended to convey that certain embodiments could include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A system configured to detect planar objects, the system comprising:
a three-dimensional (3D) sensor positioned to detect a planar object along a transverse direction; and
a first surface that supports the planar object, the first surface positioned such that the planar object is disposed between the first surface and the 3D sensor along the transverse direction,
wherein the 3D sensor is configured to detect the planar object without detecting the first surface.

2. The system as recited in claim 1, the system further comprising:
a second surface that supports the first surface, the second surface defining a material composition different than a material composition defined by the first surface.

3. The system as recited in claim 2, wherein the second surface is positioned such that the first surface is between the 3D sensor and the second surface along the transverse direction.

4. The system as recited in any one of the preceding claims, wherein the first surface is configured to reflect light such that the first surface defines a reflective surface, or the first surface is configured to absorb light such that the first surface defines an absorbent surface.

5. The system as recited in claim 4, wherein the material composition of the first surface is based on the 3D sensor.

6. The system as recited in claim 3, wherein the first surface is configured to allow light to pass through the first surface such that the first surface defines a transparent surface.

7. The system as recited in claim 6, wherein the transparent surface is positioned such that space is defined between the second surface and the transparent surface along the transverse direction.

8. The system as recited in claim 7, wherein the space defines a distance between the transparent surface and the second surface that is greater than a threshold.

9. The system as recited in claim 8, wherein 3D sensor defines a resolution, and the threshold is based on the resolution.

10. A system configured to detect planar objects, the system comprising:
a three-dimensional (3D) sensor positioned to detect a planar object along a transverse direction; and
a first surface that supports the planar object, the first surface positioned such that the first surface is disposed between the planar object and the 3D sensor along the transverse direction,
wherein the 3D sensor is configured to detect the planar object without detecting the first surface.

11. The system as recited in claim 10, wherein the first surface is configured to allow light to pass through the first surface such that the first surface defines a transparent surface.

12. The system as recited in claim 11, wherein the first surface defines a transparent acrylic sheet.

13. The system as recited in any one of claims 10 to 12, the system further comprising:
a robotic arm attached to an end effector configured to secure the planar object such that the first surface is disposed between the planar object and the 3D sensor along the transverse direction.

14. The system as recited in claim 13, wherein the end effector is further configured to secure the first surface such that the first surface is spaced from the 3D sensor along the transverse direction.

15. A method performed by an autonomous system, the method comprising:
pressing a garment against a transparent surface;
capturing a 3D image of the garment through the transparent surface; and
performing object segmentation on the image so as to determine an appearance of the garment.
